# EUROPEAN PATENT APPLICATION

(11) **EP 2 333 033 A2**
(43) Date of publication of application: **15.06.2011**
(21) Application number: 09174096.9
(22) Date of filing: 26.10.2009
(51) Int. Cl.: C10L 5/00, C10L 5/46, C10L 9/10

(54) **Method for producing fuel from sewage sludge**

(30) Priority: 06.10.2009 PL 38920709
(71) Applicant: Politechnika Lubelska, 20-618 Lublin (PL)
(72) Inventor: Pawlowski, Lucjan, 20-710 Lublin (PL); Pawlowski, Artur, 20-710 Lublin (PL)
(74) Representative: Kaminski, Piotr

(57) **Abstract**

The invention relates to a method for producing fuel from sewage sludge which is linked with heavy metals immobilization. The method is characterized in that, to the mixture of sewage sludge and coal, glauconite in the amount of 0,2-2% on sludge dry matter basis is added, preferably in the form of a sand and gluconite mixture, of a gluconite content of 45-55% in the amount of 0,4-4 % on sludge dry matter basis.

## Description

The subject of the invention is a method for producing fuel from sewage sludge linked with immobilization of heavy metals.

Sewage sludge has so far been burdensome waste. It can be utilized for agricultural purposes, but such use faces serious difficulties. The sludge is reluctantly used for such purposes in fear of sanitary hazard. Furthermore, in cases of treatment of waste produced in industrial cities, the sludge too often contains excessive amounts of heavy ions, which indeed rules out their use in agriculture. The situation looks similar in case of use of sewage sludge for land recultivation. Also in this case the possible use of sewage sludge is limited only to cases where the contents of heavy metals does not exceed the standards allowed by law.

Due to restrictions in possibilities to store biodegradable organic matter in municipal waste dumps, as imposed by European Union legislation, also this way of utilizing sewage sludge will soon become impossible. In this situation only thermic methods will remain.

So far the most current are the processes of pyrolysis and gassing, which involve pyrolytic decomposition of organic matter with production of CH₄, CO₂, CO and the whole range of liquid hydrocarbons containing higher number of carbon atoms in the molecule.

Different variants of this process are presented in patents: Japanese JP 57051791 and JP 2000328069, JP 2007510533 and JP 2005270716, German DE 10057116 and DE 10107712, European EP 254024 and EP 155930 and American US 4353713.

Yet another method is presented in Japanese patent JP57051791, which involves mixing of broken-up sludge with heated dolomite. In the course of this process gases CO₂, CO, H₂ and a mixture of hydrocarbons are released and solid phase is generated which contains a mixture of MgO, CaO, CaCO₃, MgCO₃ and carbon. Subsequently the solid phase is treated with heated steam and in consequence gas mixture of CO₂, CO, H₂ and mixtures of hydrocarbons are produced. From both gases CO₂ is removed by means of one the known methods. Gas devoid of CO₂ is used as fuel.

Japanese patent JP 60013891 presents a method of use of sludge as a fuel for clinker firing. The sludge initially dehydrated is mixed with coal dust at the ratio of 1:2 and 0,7 % of coagulating agent is added. Then the mixture is subjected to further dehydration in the filter press. Dehydrated mixture can be used as a fuel for clinker firing in the cement kiln.

The drawback of these solutions is that a secondary discard is produced, so called fly ash, containing high amounts of non-converted carbon. The discard is difficult to utilize also because it contains mobile and over the standard amounts of heavy metals.

Other way of utilization of sewage sludge is their conversion into fuels.

One of the method described in the American patent US 4775388 involves mixing the sludge of water content of 50-80% with fuel oil containing biocide in order to produce a mixture containing 30-80% of oil derived from crude oil distillation.

Yet another method presented in European patent EP 579657 involves mixing the sewage sludge, coal ash and quicklime in the ratio of 86-45 : 14-55 : 2-5,4 and drying to obtain granulate of the diameter ≤7 mm.

European patent EP 681603 presents a method involving mixing sewage sludge w communal waste followed by addition of binding materials such as molasses, discards from breweries, starch production discards. This allows pellets formation which are incinerable or gassable. The problem of all described methods is the contents of excessive amounts of mobile heavy metals present in the ash and the slag.

The essence of the method for producing fuel from sewage sludge linked with heavy metals immobilization is that to the mixture of sewage sludge and coal glauconite in the amount of 0,2-2% on sludge dry matter basis is added, preferably in the form of sand and gluconite mixture of gluconite content of 45-55% in the amount of 0,4-4 % on sludge dry matter basis.

The beneficial effect of the invention is the immobilization of heavy metals in the ash and slag, which in consequence allows for safe storage of ash and slag in damps or its use in highway engineering.

### Example.

Dried sewage sludge of 91% dry matter content and gross calorific value of 13,5 MJ/kg was mixed in ratio of 20:80 with fine coal of gross calorific value of 23 MJ/kg and water content of 9,5% and then to the so obtained mixture concurrently added was glauconite and sand mixture of the glauconite content of 50% in the amount of 4% on sewage sludge dry matter basis. As a result obtained was a product having a gross calorific value of 20,3 MJ/J. Following burning, heavy metal leaching analysis of ash was performed. The results obtained indicate that the heavy metals content in the water extract does not exceed allowable values for class I water purity.

## Claims

1. Method for producing fuel from sewage sludge linked with heavy metals immobilization **characterized in that** to the mixture of sewage sludge and coal glauconite in the amount of 0,2-2% on sludge dry matter basis is added, preferably in the form of sand and gluconite mixture of gluconite content of 45-55% in the amount of 0,4-4 % on sludge dry matter basis.
